# DEMANDE DE BREVET EUROPEEN

(11) **EP 4 753 171 A1**
(43) Date de publication de la demande: **03.06.2026**
(21) Numéro de dépôt: 25219323.0
(22) Date de dépôt: 28.11.2025
(51) Int. Cl.: H04B 10/112, H04B 10/118, H04B 10/516

(54) **EMETTEUR, RÉCEPTEUR, SYSTÈME DE TÉLÉCOMMUNICATION ET PROCÉDÉ ASSOCIÉS**

(30) Priorité: 29.11.2024 FR 2413217
(71) Demandeur: THALES, 92190 Meudon (FR)
(72) Inventeur: LECOINTRE, Aubin Michel, 31100 TOULOUSE (FR)
(74) Mandataire: Lavoix

(57) **Abrégé**

La présente invention concerne un émetteur (4), adapté étant donné xᵢ + jx_{q}, respectivement yᵢ + jy_{q}, un symbole complexe issu d'une première, respectivement deuxième, séquence de données adapté pour composer un premier, respectivement deuxième, symbole à transmettre de l'une des manières suivantes :
- le premier symbole est xᵢ + jyᵢ et le deuxième symbole est x_{q} + jy_{q} ; ou
- le premier symbole est yᵢ + jx_{q} et le deuxième symbole est xᵢ + jy_{q} ; ou
- le premier symbole est y_{q} + jx_{q} et le deuxième symbole est yᵢ + jxᵢ; ou
- le premier symbole est xᵢ + jy_{q} et le deuxième symbole est yᵢ + jx_{q} .

## Description

La présente invention concerne un émetteur, un récepteur, un système de télécommunication, ainsi que les procédés associés.

Le développement de nouveaux services de télécommunication nécessitant des débits importants, la concurrence des réseaux terrestres avec le déploiement de la technologie 400 Gbit/s et au-delà, ainsi que la volonté de réduire la fracture numérique en permettant à tout citoyen, où qu'il soit, de bénéficier de la même qualité de service, ont causé une augmentation considérable des besoins en capacité de transmission des opérateurs satellites, nécessitant le déploiement de systèmes supplémentaires.

Face à une telle demande de capacité, les technologies optiques constituent une alternative aux technologies traditionnelles fonctionnant par radio fréquences (RF) pour la transmission de données à très haut débit. En particulier, les communications optiques en espace libre bord-sol sont une solution prometteuse pour la future génération de satellites à très haut débit.

Cependant, le canal optique satellitaire présente plusieurs inconvénients. En particulier, on observe une forte dégradation du signal à cause de la composition des couches de l'atmosphère et des turbulences. Ces phénomènes causent des évanouissements profonds interrompant ainsi la transmission entre un émetteur et un récepteur pendant plusieurs millisecondes.

Pour compenser ce problème, l'émetteur est doté d'amplificateurs optiques à très haute puissance (HPOAs) afin d'amplifier le signal optique avant transmission en espace libre.

Par ailleurs, l'émetteur utilise deux polarisations par longueur d'onde afin d'augmenter l'efficacité spectrale : pour une longueur d'onde donnée, le signal comporte ainsi deux composantes avec l'une un axe de polarisation X et l'autre un axe de polarisation Y distinct l'une de l'autre, par raccourci ces composantes étant communément appelées polarisation X et polarisation Y du signal. Dans ce cas, pour différentes contraintes technologiques (maturité technologiques, spatialisation des solutions...) et pratiques (haut gain d'amplification, imperfections optiques...), les deux composantes d'une même longueur d'onde et de polarisation distincte composant le signal optique à la longueur d'onde considérée, i.e. les deux polarisations X, Y, sont amplifiées par deux HPOAs différents dans l'émetteur. Cependant, à cause notamment de contraintes technologiques, d'imprécisions de reproduction des composants, de disparités et imperfections des composants, et de l'environnement (spatial, par exemple) etc., il est difficile d'obtenir à tout instant le même gain d'amplification pour les deux HPOAs contribuant à la transmission du signal optique, ce qui induit une différence de puissance (et donc une différence de performance) entre les deux polarisations X, Y du signal optique final émis. De plus, ce gain de puissance n'est pas prédictible et peut aussi varier dans le temps.

De manière plus générale, dans l'architecture globale (principalement au niveau du front end optique de l'émetteur et de celui du récepteur), le signal optique traverse plusieurs équipements qui ne garantissent pas une isolation parfaite entre les deux composantes : c'est ainsi qu'on observe des rotations des axes de polarisations à différents endroits, ce qui a pour effet de créer une interférence de chacune des composantes sur l'autre. Par exemple, les fibres optiques, les séparateurs de polarisation, ou PBS, de l'anglais « Polarisation Beam Splitter » et les combineurs de polarisation ou PBC, de l'anglais « Polarization Beam Combiner » utilisés dans les systèmes de télécommunications par fibres optiques peuvent également causer des disparités dans l'amplitude des deux composantes du signal, et en diminuer la qualité de transmission.

Dans le cadre d'une transmission cohérente, on cherche à résoudre ce mélange des composantes, à la réception au niveau de l'unité de traitement numérique du signal, typiquement dans l'étage d'égalisation.

Même si cette égalisation apporte une amélioration, la composante la moins amplifiée présentera toujours des performances dégradées par rapport à l'autre. Ainsi, pour un rapport signal à bruit donné (puissance du signal optique totale des deux composantes par rapport à la puissance de bruit totale), on observe un déséquilibre de la qualité par rapport au cas idéal où les deux amplificateurs amplifient avec le même gain : la polarisation la moins amplifiée présentera des performances dégradées par rapport au cas idéal. Ceci est pénalisant d'un point de vue système car on établit le bilan de liaison sur la base de la polarisation de moindre performance.

Il existe différents types de techniques pour compenser ce problème, par exemple :
- algorithmes de traitement du signal comme la transformation dans l'espace de Stokes, par exemple : l'espace de Stokes est une représentation mathématique de l'état de polarisation d'une onde électromagnétique ; dans l'espace de Stokes, l'état de polarisation d'une onde est représenté par un point dans un espace à quatre dimensions, où chaque dimension correspond à un paramètre de polarisation différent ; en utilisant les coordonnées de Stokes, une transformation matricielle est définie, qui égalise la puissance sur les deux polarisations ;
- multiplexage de polarisation et/ou pré-codage : application d'un précodage tout en répartissant les deux flux de données sur les polarisations.

Ces techniques présentent l'inconvénient d'ajouter de la complexité de traitement et d'accroître de manière importante les besoins en mémoire au niveau des traitements émetteurs et récepteurs (surtout à très haut débit). En outre, les algorithmes de type transformation dans l'espace de Stokes présentent des gains notables seulement à très haut rapport signal à bruit, ce qui n'est pas le cas des communications spatiales où les rapports signal à bruit sont très faibles à cause de la grande distance entre la station sol et le satellite.

Un but de l'invention est notamment d'améliorer la transmission d'informations numériques par l'intermédiaire d'un signal optique comportant deux polarisations, et ce de manière simple et en limitant la puissance électrique consommée.

Plus globalement le but de l'invention est d'améliorer la transmission d'informations numérique entre un émetteur et un récepteur via deux chaînes de transmission par l'intermédiaire d'un signal de télécommunication comportant deux composantes, et ce de manière simple et en limitant la puissance électrique consommée.

A cet effet, suivant un premier aspect l'invention a pour objet un émetteur, adapté pour transmettre, à destination d'un récepteur, deux séquences de données numériques d'entrée comprenant une première séquence et une deuxième séquence, en utilisant deux chaînes de transmission distinctes comprenant une première chaîne et une deuxième chaîne de transmission, l'émetteur comprenant :
un bloc de transformation adapté pour transformer les données numériques de la première séquence, respectivement de la deuxième séquence, en symboles complexes comprenant chacun une partie imaginaire et une partie réelle ;
un premier bloc de traitement en émission adapté pour recevoir en entrée des premiers symboles complexes à transmettre via la première chaîne de transmission et pour mettre en œuvre la transmission desdits premiers symboles complexes via ladite première chaîne de transmission à destination du récepteur ;
un deuxième bloc de traitement en émission adapté pour recevoir en entrée des deuxièmes symboles complexes à transmettre via la deuxième chaîne de transmission et pour mettre en œuvre la transmission desdits deuxièmes symboles complexes via ladite deuxième chaîne de transmission à destination du récepteur ;
étant donné xᵢ + jx_{q} un symbole complexe issu de la transformation, par le bloc de transformation, de la première séquence et étant donné yᵢ + jy_{q} un symbole complexe issu de la transformation, par le bloc de transformation, de la deuxième séquence,
ledit émetteur est caractérisé en ce qu'il est adapté pour composer les premiers symboles complexes et deuxième symboles complexes à transmettre en combinant les symboles issus de la première séquence et de la deuxième séquence de l'une des manières suivantes :
   - le premier symbole est xᵢ + jyᵢ et le deuxième symbole est x_{q} + jy_{q} ; ou
   - le premier symbole est yᵢ + jx_{q} et le deuxième symbole est xᵢ + jy_{q} ; ou
   - le premier symbole est y_{q} + jx_{q} et le deuxième symbole est yᵢ + jxᵢ ; ou
   - le premier symbole est xᵢ + jy_{q} et le deuxième symbole est yᵢ + jx_{q} .

L'invention permet ainsi de diminuer l'impact, sur la qualité de la transmission, des disparités survenant entre les deux chaînes de transmission, par exemple entre deux polarisations du signal optique. Elle résout le problème de manière simple en échangeant à l'émission et à la réception une composante I ou Q d'un des deux signaux à transmettre sur une des chaînes de transmission, (par exemple la chaîne de transmission correspondant à la voie optique de polarisation X), avec la composante I ou Q de l'autre des deux signaux à transmettre l'autre des chaînes de transmission (par exemple la chaîne de transmission correspondant à la voie optique de la polarisation Y), où I est la composante dite en phase (In-phase), respectivement Q la composante dite en quadrature (Q), d'un signal par exemple à modulation complexe sur deux polarisations (DP-QPSK). Ainsi l'information à transmettre est répartie de façon équilibrée entre les deux polarisations qui subissent des canaux (et ratios Signal à Bruit, dit SNR de l'anglais Signal-to-Noise-Ratio) différents.

Dans des modes de réalisation, l'émetteur comprend une ou plusieurs des caractéristiques suivantes, prises isolément ou suivant toutes les combinaisons techniquement possibles :
- la première chaîne de transmission correspond à la transmission sélective d'une composante de polarisation selon un seul des axes distincts X, Y d'un signal optique à une longueur d'onde λ donnée et la deuxième chaîne de transmission correspond à la transmission sélective d'une composante de polarisation selon le seul autre des axes X, Y dudit signal optique à la longueur d'onde λ ;
- l'émetteur est adapté pour moduler la composante de polarisation du signal optique selon l'axe X en fonction des premiers symboles complexes et pour moduler la composante de polarisation du signal optique selon l'axe Y en fonction des deuxièmes symboles complexes,
   la première chaîne de transmission comportant un premier amplificateur optique de gain G1 adapté pour amplifier sélectivement la composante de polarisation du signal optique selon l'axe X,
la deuxième chaîne de transmission comportant un deuxième amplificateur optique de gain G2 distinct de G1 et adapté pour amplifier sélectivement la composante de polarisation du signal optique selon l'axe Y.

L'invention concerne également un récepteur adapté pour recevoir le signal émis par l'émetteur suivant le premier aspect de l'invention et pour le convertir en données numériques de sortie.

Dans des modes de réalisation, le récepteur comprend deux blocs de traitement en réception et adapté pour déterminer, dans le premier bloc de traitement en réception, des premiers symboles complexes en fonction du signal reçu et pour déterminer, dans le deuxième bloc de traitement en réception, des deuxièmes symboles complexes en fonction du signal reçu, les premiers et deuxièmes symboles complexes comprenant chacun une partie imaginaire et une partie réelle ;
ledit récepteur étant adapté pour composer des symboles complexes correspondant à une première séquence et des symboles complexes correspondant à une deuxième séquence, en combinant les premiers et deuxièmes symboles complexes de manière inverse à la combinaison effectuée dans l'émetteur ;
ledit récepteur comportant en outre un bloc de transformation adapté pour transformer les symboles complexes correspondant à la première séquence, respectivement correspondant à la deuxième séquence, en une première séquence de données numériques, respectivement en une deuxième séquence de données numériques.

L'invention concerne également un système de transmission comprenant un tel récepteur et l'émetteur selon le premier aspect de l'invention.

L'invention concerne également un procédé de transmission d'information pour transmettre, à destination d'un récepteur, deux séquences de données numériques d'entrée comprenant une première séquence et une deuxième séquence, en utilisant deux chaînes de transmission distinctes comprenant une première chaîne et une deuxième chaîne de transmission, ledit procédé comprenant les étapes suivantes mises en œuvre par l'émetteur :
- transformer les données numériques de la première séquence, respectivement de la deuxième séquence, en symboles complexes comprenant chacun une partie imaginaire et une partie réelle ;
- recevoir en entrée d'un premier bloc de traitement en émission des premiers symboles complexes à transmettre via la première chaîne de transmission et mettre en œuvre la transmission desdits premiers symboles complexes via ladite première chaîne de transmission à destination du récepteur ;
- recevoir en entrée d'un deuxième bloc de traitement en émission des deuxièmes symboles complexes à transmettre via la deuxième chaîne de transmission et mettre en œuvre la transmission desdits deuxièmes symboles complexes via ladite deuxième chaîne de transmission à destination du récepteur ;
   selon lequel, étant donné xᵢ + jx_{q} un symbole complexe issu de la transformation de la première séquence et étant donné yᵢ + jy_{q} un symbole complexe issu de la transformation de la deuxième séquence
   ledit procédé est caractérisé en ce qu'il est adapté pour composer les premiers symboles complexes à transmettre et deuxième symboles complexes à transmettre en combinant les symboles issus de la première séquence et de la deuxième séquence de l'une des manières suivantes :
      - le premier symbole est xᵢ + jyᵢ et le deuxième symbole est x_{q} + jy_{q} ; ou
      - le premier symbole est yᵢ + jx_{q} et le deuxième symbole est xᵢ + jy_{q} ; ou
      - le premier symbole est y_{q} + jx_{q} et le deuxième symbole est yᵢ + jxᵢ ; ou
      - le premier symbole est xᵢ + jy_{q} et le deuxième symbole est yᵢ + jx_{q} .

Dans des modes de réalisation, ce procédé comprend une ou plusieurs des caractéristiques suivantes, prises isolément ou suivant toutes les combinaisons techniquement possibles :
- la première chaîne de transmission correspond à la transmission sélective d'une composante de polarisation selon un seul des axes distincts X, Y d'un signal optique à une longueur d'onde λ donnée et la deuxième chaîne de transmission correspond à la transmission sélective d'une composante de polarisation selon le seul autre des axes X, Y dudit signal optique à la longueur d'onde λ ;
- le procédé comprenant au moins les étapes suivantes mises en œuvre par un récepteur : réception du signal émis par l'émetteur et conversion en données numériques de sortie ;
- le procédé comprenant au moins les étapes suivantes mises en œuvre par le récepteur :
   déterminer, dans le premier bloc de traitement en réception, des premiers symboles complexes en fonction du signal reçu ; et
   déterminer, dans le deuxième bloc de traitement en réception, des deuxièmes symboles complexes en fonction du signal reçu, les premiers et deuxièmes symboles complexes comprenant chacun une partie imaginaire et une partie réelle ;
   composer des symboles complexes correspondant à une première séquence et des symboles complexes correspondant à une deuxième séquence, en combinant les premiers et deuxièmes symboles complexes de manière inverse à la combinaison effectuée dans l'émetteur ;
   transformer les symboles complexes correspondant à la première séquence, respectivement correspondant à la deuxième séquence, en une première séquence de données numériques, respectivement en une deuxième séquence de données numériques.

L'invention apparaîtra plus clairement à la lecture de la description qui va suivre, donnée uniquement à titre d'exemple non limitatif, et faite en référence aux dessins dans lesquels :
- [Fig. 1] la figure 1 est une représentation d'un système de transmission dans un mode de réalisation de l'invention,
- [Fig. 2] la figure 2 est un schéma bloc du système de transmission de la figure 1,
- [Fig. 3] la figure 3 est un schéma d'une partie du système de transmission de la figure 2,
- [Fig. 4] la figure 4 est un logigramme d'un procédé de transmission d'information dans un mode de réalisation de l'invention, le procédé étant mis en œuvre par le système de transmission de la figure 1
- [Fig. 5] la figure 5 est un schéma d'une partie du système de transmission de la figure 2 dans un mode de réalisation de l'invention,
- [Fig. 6] la figure 6 est un schéma d'une partie du récepteur du système de transmission de la figure 2.

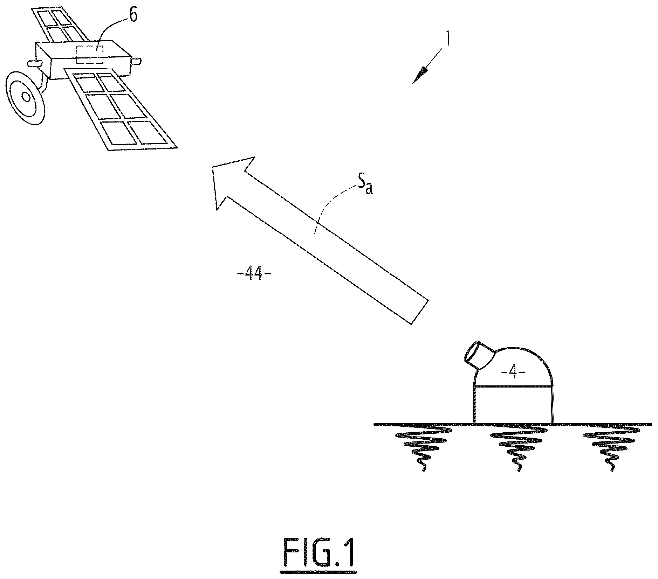

La figure 1 représente un système de transmission 1 dans un mode de réalisation de l'invention.

Le système de transmission 1 comprend un émetteur 4 et un récepteur 6.

Dans l'exemple considéré, l'émetteur 4 est disposé au sol, par exemple dans une station de télécommunications et le récepteur 6 est dans un mode de réalisation embarqué dans un aéronef ou un satellite.

En variante, c'est l'émetteur 4 qui est embarqué dans un aéronef ou un satellite et le récepteur 6 qui est au sol. En variante encore, l'émetteur 4 et le récepteur 6 sont tous deux au sol ou embarqués dans des porteurs de type satellites ou autres.

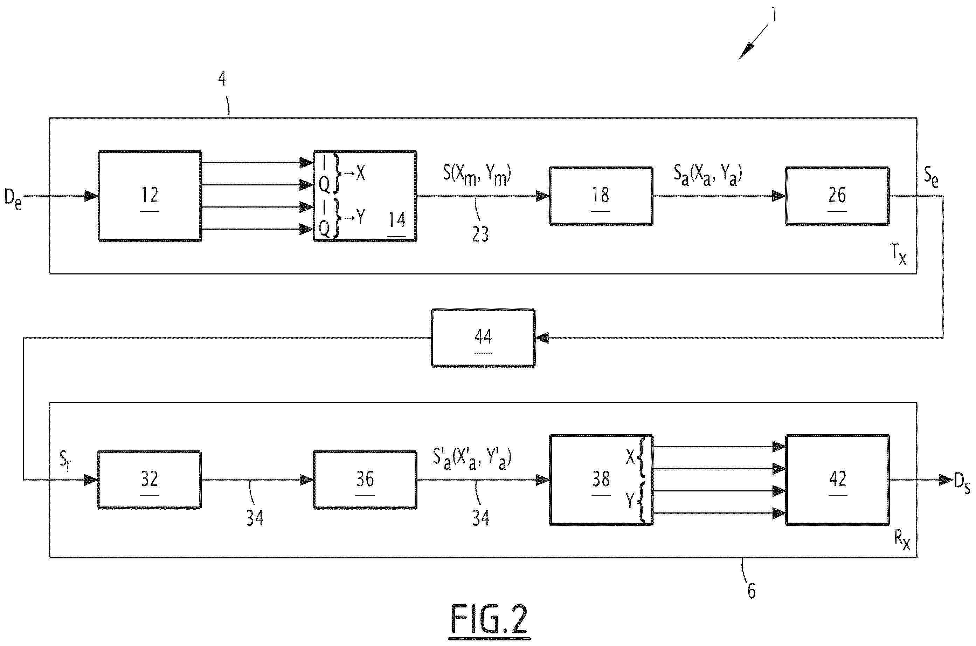

Comme cela est présenté sur la figure 2, l'émetteur 4 comprend dans un mode de réalisation un module de traitement numérique 12. Le module de traitement numérique 12 est par exemple réalisé sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*). En variante non représentée, le module de traitement numérique 12 est réalisé sous la forme d'un logiciel, stocké dans une mémoire et exécutable par un processeur associé à la mémoire. De même en variante non représentée, le module de traitement numérique 12 est réalisé par des composants analogiques optiques.

L'émetteur 4 comprend en outre un modulateur optique 14, dont l'entrée est alimentée par la sortie du module de traitement numérique 12. Le modulateur optique 14 est par exemple un interféromètre de Mach-Zehnder à double polarisation, comprenant une source laser (une polarisation selon un axe X, une polarisation selon un axe Y). Dans le mode de réalisation considéré, ces axes de polarisation sont par exemple orthogonaux l'un à l'autre.

L'émetteur 4 comprend en outre un module amplificateur 18, connecté au modulateur optique 14.

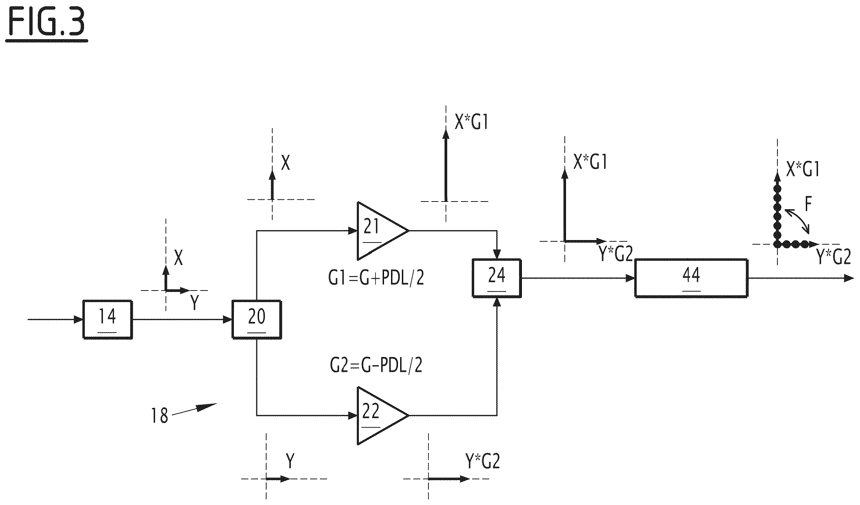

En référence à la figure 3, le module amplificateur 18 comprend un séparateur de faisceau de polarisation 20, aussi appelé PBS, de l'anglais « Polarization Beam Splitter ». De manière avantageuse, le séparateur de faisceau de polarisation 20 est un dispositif optique passif. Le séparateur de faisceau de polarisation 20 est configuré pour diviser un signal optique en deux composantes, l'une des composantes correspondant à la première polarisation X, l'autre composante à la deuxième polarisation Y,

Le module amplificateur 18 comprend deux amplificateurs optiques 21 et 22. Les amplificateurs optiques 21 et 22 sont dans un mode de réalisation des amplificateurs optiques à très haute puissance. L'amplificateur optique 21, respectivement 22, est configuré pour amplifier un signal optique qui le traverse avec un gain G1 respectivement un gain G2. Les gains G1 et G2 sont dans un mode de réalisation prédéfinis et choisis par un fabriquant du module amplificateur 18. En théorie, les gains G1 et G2 sont choisis comme étant égaux. Cependant, à cause par exemple d'imperfections dans les amplificateurs optiques 21 et 22, de contraintes matérielles ou de l'environnement spatial, dans la pratique, les gains G1 et G2 sont différents et peuvent varier dans le temps. Cela se traduit par des polarisations avec des puissances différentes, et donc par des performances différentes. Or, d'un point de vue du système et de la qualité de service, cela n'est pas souhaitable. On appelle ici PDL (polarization dependent loss) la disparité de qualité entre les deux polarisations ici due à la différence de gain d'amplification instantanée entre les deux HPOAs.

La figure 3 illustre les effets des gains sur les polarisations X, Y au cours de la transmission. Des rotations (représentées symboliquement sur la figure 3 par la flèche F) de polarisation aléatoire, sont introduites par les divers composants optiques utilisés dans l'émetteur et le récepteur (par exemple fibre optique monomode SMF (ou SMF en anglais, Single Mode Fiber), front end FSO Tx et Rx ...) et par le canal de propagation 44, ce qui provoque un mélange des deux polarisations. Dans le cas d'une modulation cohérente, des algorithmes d'égalisation adaptatifs tels que le CMA (Constant Modulus Algorithm) seront couramment utilisés pour séparer les deux polarisations.

Le module amplificateur 18 comprend en outre un combineur de faisceaux de polarisation 24, aussi appelé PBC, de l'anglais « Polarization Beam Combiner ». Le PBC 24 est dans un mode de réalisation un dispositif optique passif. Le PBC 24 combine dans un mode de réalisation les deux composantes en un même signal optique.

Dans un mode de réalisation, le modulateur optique 14 et l'amplificateur 18 sont connectés entre eux par des fibres à maintien de polarisation 23, aussi dites PMF, de l'anglais « Polarisation-Maintaining Fibre ». Dans un autre mode, les fibres utilisées sont à la place de type monomode, dites SMF, de l'anglais « Single Mode Fibers ».

De manière avantageuse, l'émetteur 4 comprend une tête optique 26, également appelée module d'interface air, et également connue sous le nom anglais « optical front end » ou OFE. La tête optique 26 comprend de manière avantageuse un ou plusieurs des dispositifs suivants : un dispositif optique, un dispositif de pointage, un dispositif de collimation, un dispositif de couplage, ou encore des dispositifs de compensation ou de pré-compensation des turbulences atmosphériques. Ces dispositifs sont actifs ou passifs, et sont par exemple formés d'arrangements de lentilles et/ou de miroirs.

En référence à la figure 2, le récepteur 6 comprend dans un mode de réalisation une tête optique 32. Cette tête optique 32 est dans un mode de réalisation configurée pour recevoir un signal optique et pour le focaliser dans une fibre optique 34 qui relie dans un mode de réalisation la tête optique 32 et un module amplificateur 36, inclus également dans le récepteur 6. Le module amplificateur 36 est dans un mode de réalisation un amplificateur à faible bruit.

Le récepteur 6 comprend dans un mode de réalisation un démodulateur optique 38 et un module de traitement numérique 42. Dans un mode de réalisation, le module amplificateur 36 et le démodulateur optique 38 sont reliés entre eux également par une fibre optique 34.

Le démodulateur optique 38 est configuré pour convertir un signal optique en signal électrique, représentatif du signal optique. Dans un mode de réalisation, le module de traitement numérique 12, le modulateur optique 14 d'une part, et le démodulateur optique 38 et le module de traitement numérique 42 d'autre part, correspondent les uns aux autres. Par exemple, le module de traitement numérique 12 et le modulateur optique 14 sont configurés pour générer un signal optique selon une modulation cohérente, et le démodulateur optique 38 et le module de traitement numérique 42 sont configurés pour effectuer des opérations qui permettent de démoduler un signal optique cohérent.

Le module de traitement numérique 42 est par exemple réalisé sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*). En variante non représentée, le module de traitement numérique 42 est réalisé sous la forme d'un logiciel, stocké dans une mémoire et exécutable par un processeur associé à la mémoire. De même en variante non représentée, le module de traitement numérique 42 est réalisé via des composants optiques analogiques.

Un procédé de traitement d'information va être maintenant expliqué, en regard des figures 3, 4, 5 et 6. Ce procédé est mis en œuvre par le système de transmission 1. Il vise à transmettre des informations depuis l'émetteur 4 vers le récepteur 6 via deux composantes d'un signal optique à la longueur d'onde λ. Les axes de polarisation de ces composantes X, Y sont distincts et comme indiqué plus haut, dans le mode de réalisation considéré à titre d'exemple, l'axe X est orthogonal à Y.

Le module de traitement numérique 12 reçoit dans un mode de réalisation des données numériques d'entrée Dₑ lors d'une étape de réception 102. Les données numériques d'entrée Dₑ sont distribuées d'une part en un premier ensemble de bits, nommés bits *x*, et d'autre part en un second ensemble de bits, nommés bits *y*.

Le module de traitement numérique 12 traite les données numériques d'entrée Dₑ lors d'une étape de conversion en symboles complexes 104. Dans un mode de réalisation, lors de l'étape 104, le module de traitement numérique 12 effectue en outre des traitements de suréchantillonnage et/ou encore de mises en forme etc. Cela permet par exemple d'améliorer la transmission de l'information numérique et de limiter les erreurs dans le signal restitué dans le récepteur 6.

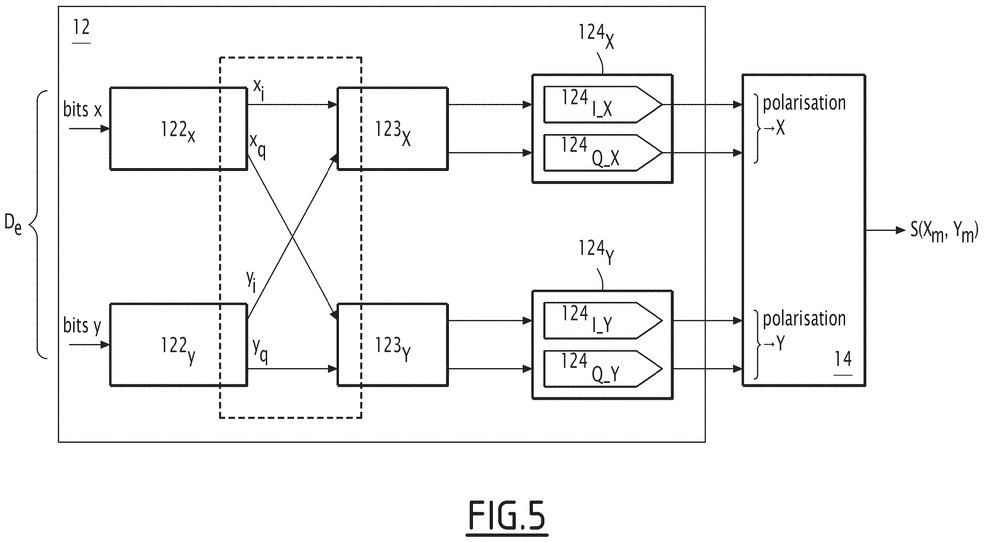

Par exemple, en référence à la figure 5 représentant schématiquement le module de traitement numérique 12 et le modulateur 14 dans un mode de réalisation, dans le module de traitement numérique 12, les bits *x* sont reçus en entrée d'un bloc 122ₓ qui détermine des symboles complexes en fonction de ces bits *x* et délivre ces symboles complexes en sortie. Un tel symbole s'écrit xᵢ + jx_{q,} ; il comporte la partie réelle xᵢ (ou composante I pour l'anglais In-Phase Component) et la partie imaginaire x_{q} (ou composante Q pour l'anglais Quadrature-Phase Component).

Dans un mode de réalisation parmi ces symboles, il y en a dont la partie réelle est non nulle et il y en a dont la partie imaginaire est non nulle.

Similairement, les bits *y* sont reçus en entrée d'un bloc 122_{y} qui détermine des symboles complexes en fonction de ces bits *y* et délivre ces symboles complexes en sortie. Un tel symbole s'écrit yᵢ + jy_{q,} ; il Ces symboles comportent ainsi une partie réelle yᵢ et une partie imaginaire y_{q} (et parmi ces symboles, il y en a dont la partie réelle est non nulle et il y en a dont la partie imaginaire est non nulle).

La détermination des symboles à partir des bits *x* (idem pour les bits *y*) est effectuée par le bloc 122ₓ (idem par le bloc 122_{y}) par exemple par modulation QPSK (en anglais Quadrature Phase Shift Keying), ou toute modulation complexe (QAM, M-PSK, PCS ...) transposant des données numériques en symboles complexes.

Ensuite dans une étape 106, le module de traitement numérique 12 détermine des symboles complexes modifiés en permutant l'une des parties imaginaire et réelle des symboles issus du bloc 122ₓ avec l'une des parties imaginaire et réelle des symboles complexes fournis par le bloc 122_{y}.

Ainsi dans chaque symbole modifié, soit la partie imaginaire soit la partie réelle a été déterminée en fonction de l'ensemble de bits *x* (et pas en fonction l'ensemble de bits *y*), l'autre desdites parties réelle et imaginaire a été déterminée en fonction de l'ensemble de bits *y* (et pas en fonction l'ensemble de bits *x*).

C'est cette étape 106 qui diffère du traitement de l'art antérieur dans lequel les symboles issus des bits *x* (i.e. parties réelles et parties imaginaires) étaient transmis uniquement sur la polarisation X, tandis que les symboles issus des bits *y* (i.e. parties réelles et parties imaginaires) étaient transmis uniquement sur la polarisation Y.

Tandis que dans l'exemple ici considéré, le module de traitement numérique 12 détermine des symboles complexes modifiés en permutant la partie imaginaire x_{q} des symboles issus du bloc 122x avec la partie réelle yᵢ des symboles complexes fournis par le bloc 122 (cf. cadre en tiret en figure 5).

Ainsi les étages suivants numériques (DSP) ou analogiques (OFE) vont traiter les couples de composantes (xᵢ ; yᵢ) en tant que forme d'onde QPSK sur la polarisation X avec donc des symboles complexes xᵢ + j.yᵢ et le couple (x_{q} ; y_{q}) une QPSK x_{q} + j.y_{q} pour la polarisation Y (sachant qu'ultérieurement, en réception après les étages OFE Tx, canal de propagation, OFE Rx et DSP Rx cohérent, comme décrits plus loin, les composantes x_{q} et yᵢ seront ré-échangées, réordonnées pour retrouver leur position initiale). Cette solution permet de profiter de la diversité de polarisation et de quadrature pour offrir deux canaux de communications avec des SNR équivalents en présence de PDL.

Dans un mode de réalisation, un filtre 123_{X} applique un filtrage à racine de cosinus surélevé RRC sur les symboles complexes xᵢ + j.yᵢ et un filtre 123_{Y} applique un filtrage RRC sur les symboles complexes x_{q} + j.y_{q}.

Dans un bloc de conversion numérique - analogique 124_{X}, la composante réelle xᵢ numérique, respectivement imaginaire yᵢ numérique, est convertie en signal correspondant analogique par un convertisseur 124_{I_X}, respectivement 124_{Q_X}. Les signaux analogiques résultants représentant le symbole complexe xᵢ + j.yᵢ sont fournis en entrée du modulateur 14 correspondant à la voie de polarisation X.

Dans un bloc de conversion numérique - analogique 124_{Y}, la composante réelle x_{q} numérique, respectivement imaginaire y_{q} numérique, est convertie en signal correspondant analogique par un convertisseur 124_{I_Y}, respectivement 124_{Q_Y}. Les signaux analogique résultants représentant le symbole complexe x_{q} + j.y_{q} sont fournis en entrée du modulateur 14 correspondant à la voie de polarisation Y.

Le modulateur optique 14 effectue une étape de modulation 108 sur ces signaux reçus. L'étape de modulation 108 est une étape de modulation dite double polarisation. L'étape de modulation 106 comprend la génération d'un signal optique S, modulé, à la longueur d'onde λ, composé des deux polarisations Xₘ (axe X) et Yₘ (axe Y). La polarisation Xₘ est représentative des données xᵢ + j.yᵢ. La deuxième polarisation Yₘ est représentative des données x_{q} + j.y_{q}.

Le signal optique S est transmis au module amplificateur 18.

Dans un mode de réalisation optionnel, cette transmission est effectuée via la fibre à maintien de polarisation 23, afin d'empêcher une rotation involontaire des polarisations.

Une étape d'amplification 110 est ensuite effectuée par le module amplificateur 18, afin de générer un signal optique amplifié Sₐ à partir du signal optique S. L'étape d'amplification 110 comprend, dans un mode de réalisation des sous-étapes, 112 à 116.

La sous-étape 112 est une sous-étape de séparation. En référence aussi à la figure 3, le signal optique S reçu en entrée est séparé par le séparateur de faisceau de polarisation 20 en deux composantes optiques selon les deux axes de polarisation X, Y du séparateur 20. Les axes de polarisation du séparateur sont dans un mode de réalisation confondus avec les axes de polarisation X et Y du signal optique S, ainsi que visible dans la figure 3.

Le séparateur de polarisation 20 transmet les composantes optiques aux amplificateurs 21 et 22.

L'amplificateur 21 amplifie la composante Xₘ (d'axe de polarisation X) avec le gain G1, générant ainsi une composante amplifiée Xₐ (d'axe de polarisation X) et l'amplificateur 22 amplifie la composante Yₘ (d'axe de polarisation Y) selon le gain G2, générant ainsi une composante amplifiée Yₐ.

Le combineur de faisceaux de polarisation 24 effectue la sous-étape 116, qui est une sous-étape de combinaison. Lors de la sous-étape de combinaison 116, les composantes amplifiées Xₐ et Yₐ sont transmises au combineur de faisceaux de polarisation 24 qui les combine pour former le signal optique amplifié Sₐ. Cette transmission a lieu via une fibre optique, ou, en variante, en espace libre.

Le signal optique amplifié Sₐ est ensuite, dans un mode de réalisation, transmis à la tête optique 26, par exemple via une fibre optique, ou en variante, en espace libre. La tête optique 26 effectue une étape d'émission 118 du signal optique amplifié Sₐ dans un milieu de propagation 44, dit aussi canal de propagation, à destination du récepteur 6. Dans un mode de réalisation, lors de l'étape d'émission 118, la tête optique effectue en outre une ou plusieurs des opérations suivantes, en fonction des dispositifs compris dans la tête optique 26 : une opération de pointage, de collimation, de compensation ou de pré-compensation, pour améliorer la qualité du signal amplifié Sₐ, et limiter les pertes ou la distorsion causées du signal amplifié Sₐ émis dans le milieu de propagation 44.

Le milieu de propagation 44 est par exemple une fibre optique, ou l'atmosphère dans le cas d'une transmission optique en espace libre, ainsi que représenté à la figure 1.

Suite à la propagation du signal via le milieu 44, un signal optique est reçu par le récepteur 6 lors d'une étape de réception 120, dans un mode de réalisation via la tête optique 32. Ce signal optique reçu par le récepteur 6 est dit signal optique reçu Sᵣ.

Lors de l'émission du signal optique amplifié Sₐ dans le milieu de propagation 44, le signal optique amplifié Sₐ est atténué et ses composantes Xₐ et Yₐ se sont mélangées à cause par exemples d'inhomogénéités du milieu de propagation 44, ou dans le cas de l'atmosphère, du fait des turbulences ou des variations de composition des couches de l'atmosphère. Ainsi, le signal optique amplifié Sₐ tel qu'émis par l'émetteur 4 et le signal optique reçu Sᵣ par le récepteur 6 ne sont pas identiques, ainsi que représenté à la figure 3.

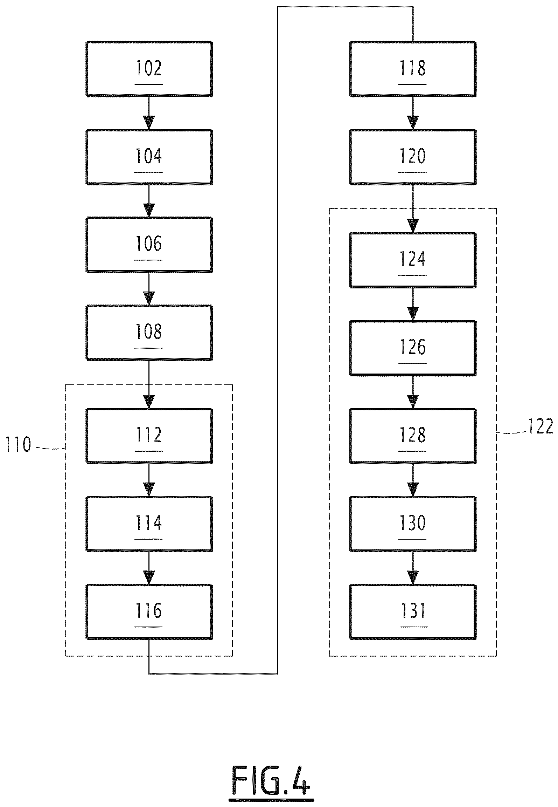

En référence à la figure 4, le récepteur 6 effectue un ensemble 122 d'étapes convertissant le signal optique reçu Sᵣ en données numériques de sortie Dₛ censés être égales aux données d'entrée Dₑ Pour cela, dans un mode de réalisation, le récepteur 6 effectue les étapes 124 à 130 suivantes.

En référence à la figure 2 également, dans un mode de réalisation, la tête optique 32 focalise le signal optique reçu Sᵣ lors de l'étape de focalisation 124 et le transmet au module d'amplification 36 via la fibre optique 34.

Lors de l'étape d'amplification 126, le module d'amplification 36 amplifie le signal optique reçu Sᵣ pour former un signal optique reçu amplifié Sₐ'.

Le module d'amplification 36 transmet le signal optique reçu amplifié Sₐ' au démodulateur optique 38.

Dans l'étape de démodulation 128, le démodulateur optique 38 démodule le signal optique reçu amplifié Sₐ' : il extrait deux signaux analogiques démodulés, qu'il détermine sélectivement en fonction de la composante X'ₐ d'axe X d'une part (à l'exclusion de la composante Y'ₐ) et il extrait deux signaux analogiques démodulés, qu'il détermine sélectivement en fonction de la composante Y'ₐ d'axe Y d'autre part.

Cette démodulation repose par exemple sur un récepteur intégré cohérent dit aussi ICR (de l'anglais « Integrated Coherent Receiver ») comprenant un oscillateur local, un PBS, un déphaseur 90° et de quatre photodiodes (une par composante Xi, Xq, Yi, Yq). L'ICR permet la conversion du signal optique en 4 signaux RF qui seront fournis aux convertisseurs 224 mentionnés ci-après.

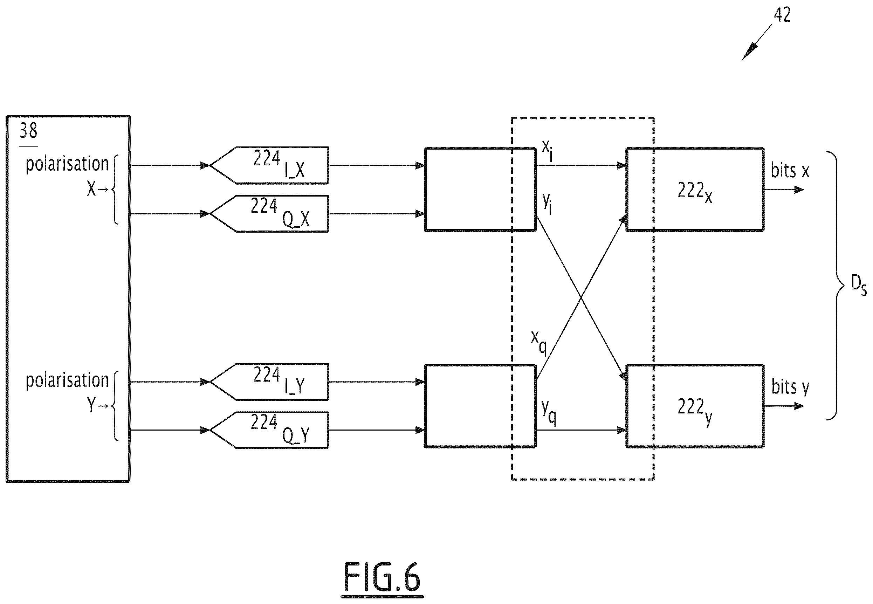

En référence à la figure 6, un de ces deux signaux démodulés issus de la composante X'ₐ et qui représente la partie réelle de symboles complexes, est ensuite converti en numérique (composante xᵢ) par un bloc convertisseur 224_{I_X} ; l'autre de ces deux signaux démodulés issus de la composante X'ₐ et qui représente la partie imaginaire de symboles complexes, est également converti (composante yᵢ) en numérique, par un bloc convertisseur 224_{Q_X}.

Similairement, un des deux signaux démodulés issus de la composante Y'ₐ et qui représente la partie réelle de symboles complexes, est ensuite converti (composante x_{q}) en numérique par un bloc convertisseur 224_{I_Y} ; l'autre des deux signaux démodulés issus de la composante Y'ₐ et qui représente la partie imaginaire (composante y_{q}) de symboles complexes, est également converti en numérique, par un bloc convertisseur 224_{Q_Y}.

Les parties réelle et imaginaire de ces coefficients complexes respectivement issus des axes de polarisation X, Y sont fournies en entrée du module de traitement numérique 42.

Dans une étape 130, un échange réciproque de celui fait en entrée entre les composantes des signaux complexes à l'étape 106, est effectué, avant leur fourniture aux blocs 222ₓ et 222_{y} de transformation des symboles complexes en bits.

Ainsi, le symbole complexe issu de la polarisation d'axe X étant xᵢ +j yᵢ et le symbole complexe issu de la polarisation d'axe Y étant x_{q} +j y_{q}, les valeurs yᵢ et x_{q} sont ré-échangées entre elles
Puis dans une étape 131 de transformation en bits, le bloc 222ₓ détermine un ensemble de bits x en fonction des symboles complexes xᵢ +jx_{q} issus de l'opération d'échange et similairement le bloc 222_{y} détermine un ensemble de bits y en fonction des symboles complexes yᵢ +jy_{q} issus de l'opération d'échange, de manière correspondante à la transformation inverse réalisée dans l'émetteur. Dans l'exemple considéré où la modulation QPSK avait été utilisée dans l'émetteur, l'opération inverse de la modulation QPSK est donc mise en œuvre.

Les données numériques de sortie Dₛ comprenant ces ensembles de bits x et y sont délivrés en sortie du bloc de traitement numérique 42, représentatives des données numériques d'entrée Dₑ.

Dans le cas où le signal optique reçu Sᵣ est un signal optique cohérent, le module de traitement numérique 42 implémente dans un mode de réalisation un algorithme d'égalisation adaptatif, comme par exemple, l'algorithme de module constant, ou CMA de l'anglais « Constant Modulus Algorithm », un algorithme de synchronisation de porteuse et de trames, ou encore des algorithmes de décodage, afin de générer les données numériques de sortie Dₛ.

Grâce à cet échange entre les composantes I, Q des deux polarisations X, Y par rapport à l'art antérieur, le déséquilibre de puissance est compensé de manière numérique sans complexité algorithmique supplémentaire et on garantit deux canaux de propagation à SNR et performances équivalents, même en présence de PDL.

L'invention permet d'assurer une performance système identique (BER, information mutuelle, etc.) sur les deux polarisations et distribue la différence de gain des HPOA équitablement sur les deux polarisations. Car même si le gain des deux HPOA est différent ce qui introduit ainsi deux canaux de propagation avec deux SNR différents, une fois re-échangées dans le récepteur, les deux ensembles de bits *x* et *y* auront vu un canal équivalent en terme de SNR et donc de performance.

Dans l'approche classique selon l'art antérieur :
- l'ensemble de bits *x* via la polarisation X opère sur un canal avec un rapport signal à bruit de SNR + PDL/2 ;
- l'ensemble de bits *y* via la polarisation Y opère sur un canal avec un rapport signal à bruit de SNR - PDL/2 ;

Avec l'invention :
- l'ensemble de bits x opère sur un canal avec un rapport signal à bruit de SNR + PDL/2 pour la composante x*ᵢ* et SNR - PDL/2 pour la composante x*_{q}*, soit un rapport signal à bruit équivalent total de SNR ;
- l'ensemble de bits y opère sur un canal avec un rapport signal à bruit de SNR - PDL/2 pour la composante y*_{q}* et SNR + PDL/2 pour la composante y*ᵢ*, soit un rapport signal à bruit équivalent total de SNR.

L'invention facilite le dimensionnement système qui n'est plus basé sur le pire scénario (c'est-à-dire la polarisation la plus faible). Cette solution est très simple, peu coûteuse et ne nécessite pas de modification du front end optique. Elle offre d'excellentes performances même pour des PDL supérieur à 9 dB.

Pour illustrer les performances obtenues, on peut implémenter une chaîne de communication optique à double polarisation avec des algorithmes de traitement numérique de réception typiques. Les figures suivantes représentent les performances d'une transmission optique en termes d'information mutuelle (ou, de façon équivalente, du taux d'erreur binaire) en fonction du rapport signal sur bruit, sans et avec l'invention, pour 3 et 6 dB de PDL.

A titre comparatif, lors d'essais, avec un système fonctionnant selon l'art antérieur, les performances relatives à la transmission de celles des données x ou y via la polarisation la moins amplifiée sont en retrait (de 0.9 et 1.8 dB pour 3 et 6 dB de PDL respectivement) par rapport à la performance moyenne des deux (données x sur la polarisation X et données y sur la polarisation Y) en l'absence de mécanisme de compensation adapté ; en mettant en œuvre le mécanisme selon l'invention (on intervertit comme indiqué à l'étape 106 à l'émission et à l'étape 130 en réception, on observe que les performances de transmission des données x et des données y sont équilibrées (0.3 dB d'écart quelle que soit la PDL).

L'invention via le simple mécanisme numérique décrit permet l'insensibilité à la PDL jusqu'à plus de 9 dB sans complexité calculatoire, numérique et analogique accrue.

Il a été décrit ci-dessus un échange entre les composantes x_{q} et yᵢ, mais l'invention est valable aussi pour les trois autres types d'échanges entre composantes xᵢ, x_{q}, yᵢ et y_{q} qui sont aussi performantes :
- réalisation n° 1 : échange x_{q} et yᵢ (xᵢ + jyᵢ pour une des polarisation et x_{q} + jy_{q} pour l'autre polarisation) ; ou
- réalisation n° 2 : échange xᵢ et yᵢ (yᵢ + jx_{q} pour une des polarisation et et xᵢ + jy_{q} pour l'autre polarisation) ;
- réalisation n° 3 : échange xᵢ et y_{q} (y_{q} + jx_{q} pour une des polarisation et yᵢ + jxᵢ pour l'autre polarisation) ;
- réalisation n° 4 : échange x_{q} et y_{q} (xᵢ + jy_{q} pour une des polarisation et yᵢ + jx_{q} pour l'autre polarisation).

Le type d'échanges à effectuer entre composantes (qui peut varier au fil du temps dans des modes de réalisation) est le même dans l'émetteur et le récepteur ; il est par exemple défini dans une mémoire de ces équipements ou codé dans les informations de la trame.

Ainsi, le système de transmission 1 améliore la qualité de la transmission de données par signaux optiques, en limitant l'impact des différences d'amplification entre les deux composantes optiques du signal optique, de manière simple, simplement en imposant que la partie réelle et la partie imaginaire d'un même symbole ne soient pas amplifiées par le même amplificateur (plus globalement en imposant qu'elles empruntent des chemins de télécommunication distinctes). Ce mécanisme ne nécessite pas d'introduction de rotation de la constellation, de pré-codage numérique coté Tx, de décodage et égalisation coté Rx, ni de détection ML (maximum de vraisemblance).

Dans un mode de réalisation, le signal optique comprend plusieurs longueurs d'ondes. La chaîne de transmission est alors modifiée comme suit. L'émetteur comprend alors un module de traitement numérique et un modulateur optique par longueur d'onde. Une adaptation correspondante est effectuée dans le récepteur 6.

Le procédé précédemment décrit est alors mis en œuvre par cette chaîne de traitement pour chaque longueur d'onde.

En pratique, une longueur d'onde donnée correspond à un signal optique dont une largeur spectrale est par exemple, inférieure à 1nm.

L'invention a été décrite dans une application de télécommunications de type FSO feeder par satellite GEO, mais elle est applicable pour tous types de communications optiques (FSO feeder LEO, Optical Wireless Communication, hybride RF-FSO, LiFi, télécoms fibrées terrestre, ...) ou radiofréquence (RF - Radio Frequency, en anglais)

L'invention a été présentée dans le cas d'un exemple où le déséquilibre de gain était introduit liée par des amplificateurs distincts pour les polarisations, mais elle est également applicable pour toutes sources de déséquilibre entre les voies quel que soit le composant (de type optique, analogique, RadioFréquence (RF), ou numérique, ...) qui en est la source : PBS, PBC, fibres SMF / PMF, LNOA, HPMUX, ...

L'invention a été décrite ci-dessus dans le cas d'une diversité de traitement reposant sur l'utilisation de deux polarisations d'un signal optique. Elle peut être mise en œuvre pour tout type de diversité mise en œuvre sur deux chaînes de télécommunication filaire ou sans fil, spatiale ou terrestre, optique ou RF, i.e. dans tous les cas où on souhaite ré-équilibrer les performances entre deux chaînes de transmission utilisées. On intervertit les parties imaginaires ou réelles entre les symboles destinés à deux chaînes de communication (par exemple, chacune correspondant à une longueur d'onde distincte, lorsque la diversité exploitée repose sur l'utilisation de deux longueurs d'onde, ou chacune correspondant à une polarisation RF distincte lorsque la diversité repose sur la polarisation d'un signal RF, ou les chaînes de télécommunication correspondant à des télescopes différents, ou à deux moments angulaires orbitaux distincts (OAM)).

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. Emetteur (4), adapté pour transmettre, à destination d'un récepteur (6), deux séquences de données numériques d'entrée (Dₑ) comprenant une première séquence et une deuxième séquence, en utilisant deux chaînes de transmission distinctes comprenant une première chaîne et une deuxième chaîne de transmission, l'émetteur (4) comprenant :
un bloc de transformation (12) adapté pour transformer les données numériques de la première séquence, respectivement de la deuxième séquence, en symboles complexes comprenant chacun une partie imaginaire et une partie réelle ;
un premier bloc de traitement en émission adapté pour recevoir en entrée des premiers symboles complexes à transmettre via la première chaîne de transmission et pour mettre en œuvre la transmission desdits premiers symboles complexes via ladite première chaîne de transmission à destination du récepteur ;
un deuxième bloc de traitement en émission adapté pour recevoir en entrée des deuxièmes symboles complexes à transmettre via la deuxième chaîne de transmission et pour mettre en œuvre la transmission desdits deuxièmes symboles complexes via ladite deuxième chaîne de transmission à destination du récepteur ;
étant donné xᵢ + jx_{q} un symbole complexe issu de la transformation, par le bloc de transformation, de la première séquence et étant donné yᵢ + jy_{q} un symbole complexe issu de la transformation, par le bloc de transformation, de la deuxième séquence
ledit émetteur est **caractérisé en ce qu'**il est adapté pour composer les premiers symboles complexes à transmettre et deuxième symboles complexes à transmettre en combinant les symboles issus de la première séquence et de la deuxième séquence de l'une des manières suivantes :
- le premier symbole est yᵢ + jx_{q} et le deuxième symbole est xᵢ + jy_{q} ; ou
- le premier symbole est xᵢ + jy_{q} et le deuxième symbole est yᵢ + jx_{q} .

2. Emetteur (4) selon la revendication 1, dans lequel la première chaîne de transmission correspond à la transmission sélective d'une composante de polarisation selon un seul des axes distincts X, Y d'un signal optique à une longueur d'onde λ donnée et la deuxième chaîne de transmission correspond à la transmission sélective d'une composante de polarisation selon le seul autre des axes X, Y dudit signal optique à la longueur d'onde λ.

3. Emetteur (4) selon l'une quelconque la revendication précédente, adapté pour moduler la composante de polarisation du signal optique selon l'axe X en fonction des premiers symboles complexes et pour moduler la composante de polarisation du signal optique selon l'axe Y en fonction des deuxièmes symboles complexes,
la première chaîne de transmission comportant un premier amplificateur optique (21) de gain G1 adapté pour amplifier sélectivement la composante de polarisation du signal optique selon l'axe X,
la deuxième chaîne de transmission comportant un deuxième amplificateur optique (22) de gain G2 distinct de G1 et adapté pour amplifier sélectivement la composante de polarisation du signal optique selon l'axe Y.

4. Récepteur (6), adapté pour recevoir le signal émis par l'émetteur selon l'une quelconque des revendications 1 à 3, et pour le convertir en données numériques de sortie (Ds).

5. Récepteur (6) selon la revendication précédente, comprenant deux blocs de traitement en réception et adapté pour déterminer, dans le premier bloc de traitement en réception, des premiers symboles complexes en fonction du signal reçu et pour déterminer, dans le deuxième bloc de traitement en réception, des deuxièmes symboles complexes en fonction du signal reçu, les premiers et deuxièmes symboles complexes comprenant chacun une partie imaginaire et une partie réelle ;
ledit récepteur étant adapté pour composer des symboles complexes correspondant à une première séquence et des symboles complexes correspondant à une deuxième séquence, en combinant les premiers et deuxièmes symboles complexes de manière inverse à la combinaison effectuée dans l'émetteur (4)
ledit récepteur comportant en outre un bloc de transformation adapté pour transformer les symboles complexes correspondant à la première séquence, respectivement correspondant à la deuxième séquence, en une première séquence de données numériques, respectivement en une deuxième séquence de données numériques.

6. Système de télétransmission (1) comprenant l'émetteur (4) selon l'une quelconque des revendications 1 à 3 et le récepteur (6) selon l'une quelconque des revendications 4 et 5.

7. Procédé de transmission d'information pour transmettre, à destination d'un récepteur (6), deux séquences de données numériques d'entrée (De) comprenant une première séquence et une deuxième séquence, en utilisant deux chaînes de transmission distinctes comprenant une première chaîne et une deuxième chaîne de transmission, ledit procédé comprenant les étapes suivantes mises en œuvre par l'émetteur :
- transformer les données numériques de la première séquence, respectivement de la deuxième séquence, en symboles complexes comprenant chacun une partie imaginaire et une partie réelle ;
- recevoir en entrée d'un premier bloc de traitement en émission des premiers symboles complexes à transmettre via la première chaîne de transmission et mettre en œuvre la transmission desdits premiers symboles complexes via ladite première chaîne de transmission à destination du récepteur ;
- recevoir en entrée d'un deuxième bloc de traitement en émission des deuxièmes symboles complexes à transmettre via la deuxième chaîne de transmission et mettre en œuvre la transmission desdits deuxièmes symboles complexes via ladite deuxième chaîne de transmission à destination du récepteur ;
selon lequel, étant donné xᵢ + jx_{q} un symbole complexe issu de la transformation de la première séquence et étant donné yᵢ + jy_{q} un symbole complexe issu de la transformation de la deuxième séquence
ledit procédé est **caractérisé en ce qu'**il est adapté pour composer les premiers symboles complexes à transmettre et deuxième symboles complexes à transmettre en combinant les symboles issus de la première séquence et de la deuxième séquence de l'une des manières suivantes :
- le premier symbole est yᵢ + jx_{q} et le deuxième symbole est xᵢ + jy_{q} ; ou
- le premier symbole est xᵢ + jy_{q} et le deuxième symbole est yᵢ + jx_{q} .

8. Procédé de transmission d'information selon la revendication 7, selon la première chaîne de transmission correspond à la transmission sélective d'une composante de polarisation selon un seul des axes distincts X, Y d'un signal optique à une longueur d'onde λ donnée et la deuxième chaîne de transmission correspond à la transmission sélective d'une composante de polarisation selon le seul autre des axes X, Y dudit signal optique à la longueur d'onde λ.

9. Procédé de transmission d'information selon la revendication 7 ou 8, le procédé comprenant au moins les étapes suivantes mises en œuvre par un récepteur : réception du signal émis par l'émetteur et conversion en données numériques de sortie (Ds).

10. Procédé de transmission d'information selon la revendication 9, le procédé comprenant au moins les étapes suivantes mises en œuvre par le récepteur :
- déterminer, dans le premier bloc de traitement en réception, des premiers symboles complexes en fonction du signal reçu ; et
- déterminer, dans le deuxième bloc de traitement en réception, des deuxièmes symboles complexes en fonction du signal reçu, les premiers et deuxièmes symboles complexes comprenant chacun une partie imaginaire et une partie réelle ;
- composer des symboles complexes correspondant à une première séquence et des symboles complexes correspondant à une deuxième séquence, en combinant les premiers et deuxièmes symboles complexes de manière inverse à la combinaison effectuée dans l'émetteur (4) ;
- transformer les symboles complexes correspondant à la première séquence, respectivement correspondant à la deuxième séquence, en une première séquence de données numériques, respectivement en une deuxième séquence de données numériques.
